(19) Europäisches Patentamt
European Patent Office
Office européen des brevets

(11) **EP 3 940 346 B1**

(12) **EUROPÄISCHE PATENTSCHRIFT**

(45) Veröffentlichungstag und Bekanntmachung des Hinweises auf die Patenterteilung:
**04.05.2022 Patentblatt 2022/18**

(21) Anmeldenummer: **20186143.2**

(22) Anmeldetag: **16.07.2020**

(51) Internationale Patentklassifikation (IPC):
**G01F 1/667** *(2022.01)* **G01P 5/24** *(2006.01)*

(52) Gemeinsame Patentklassifikation (CPC):
**G01F 1/667; G01P 5/241; G01P 5/245**

(54) **DURCHFLUSSMESSGERÄT UND VERFAHREN ZUR MESSUNG DES DURCHFLUSSES EINES FLUIDS**

FLOW METER AND METHOD FOR MEASURING THE FLOW RATE OF A FLUID

DÉBITMÈTRE ET PROCÉDÉ DE MESURE DU DÉBIT D'UN FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.01.2022 Patentblatt 2022/03**

(73) Patentinhaber: **SICK Engineering GmbH**
**01458 Ottendorf-Okrilla (DE)**

(72) Erfinder: **KLEMM, Markus**
**01159 Dresden (DE)**

(74) Vertreter: **Ludewigt, Christoph**
**Sick AG**
**Intellectual Property**
**Erwin-Sick-Strasse 1**
**79183 Waldkirch (DE)**

(56) Entgegenhaltungen:
**US-A1- 2015 020 608**

**Beschreibung**

Die Erfindung betrifft ein Durchflussmessgerät und ein Verfahren zur Messung des Durchflusses eines Fluids auf Ultraschallbasis.

Für die Bestimmung der Fluss- oder Strömungsgeschwindigkeit oder des Durchflusses eines Fluids auf Ultraschallbasis sind unterschiedliche Messprinzipien bekannt.

Bei einem Differenzlaufzeitverfahren wird ein Paar Ultraschallwandler am Außenumfang der Rohrleitung mit einem gegenseitigen Versatz in Längsrichtung montiert, die quer zu der Strömung entlang eines zwischen den Ultraschallwandlern aufgespannten Messpfades wechselseitig Ultraschallsignale aussenden und registrieren. Die durch das Fluid transportierten Ultraschallsignale werden je nach Laufrichtung durch die Strömung beschleunigt oder abgebremst. Die resultierende Laufzeitdifferenz wird mit geometrischen Größen zu einer mittleren Flussgeschwindigkeit des Fluids verrechnet. Mit der Querschnittsfläche ergibt sich daraus der Volumenstrom oder Durchfluss. Für genauere Messungen können auch mehrere Messpfade mit jeweils einem Paar Ultraschallwandler vorgesehen sein, um einen Strömungsquerschnitt an mehr als einem Punkt zu erfassen. Für eine hohe Messgenauigkeit bei unsymmetrischen Geschwindigkeitsverteilungen über dem Strömungsquerschnitt sind mehrere Messpfade erforderlich, die nicht durch die Rohrachse verlaufen, so genannte nicht-diametrale Messpfade bzw. Sekantenpfade. Insbesondere sind für eine hohe Unempfindlichkeit der Volumenstrommessung gegenüber inhomogenen Strömungsverteilungen weit außermittige Sekantenpfade wünschenswert.

Die zur Erzeugung des Ultraschalls eingesetzten Ultraschallwandler weisen einen Schwingkörper auf, häufig eine Keramik. Mit dessen Hilfe wird beispielsweise auf Basis des piezoelektrischen Effekts ein elektrisches Signal in Ultraschall gewandelt und umgekehrt. Je nach Anwendung arbeitet der Ultraschallwandler als Schallquelle, Schalldetektor oder beides. Dabei muss für eine Kopplung zwischen dem Fluid und dem Ultraschallwandler gesorgt werden. Eine verbreitete Lösung besteht darin, die Ultraschallwandler mit direktem Kontakt zum Fluid in die Leitung hineinragen zu lassen. Solche intrusiven Sonden können genaue Messungen durch Störung der Strömung erschweren. Umgekehrt sind die eintauchenden Ultraschallwandler dem Fluid und dessen Druck und Temperatur ausgesetzt und werden dadurch womöglich beschädigt oder verlieren durch Ablagerungen ihre Funktion.

Grundsätzlich sind auch Techniken bekannt, bei denen die Innenwand vollständig geschlossen bleibt. Ein Beispiel ist die sogenannte Clamp-On-Montage, etwa gemäß US 4 467 659, mit der die Ultraschallwandler von außen an der Leitung befestigt werden. Damit können aber nur diametrale Messpfade durch die Rohrachse realisiert werden, wodurch bei nicht axialsymmetrischen Strömungsprofilen zusätzliche Fehler erzeugt werden.

Eine weitere Ausführung ist in DE 10 2013 101 950 A1 vorgestellt, bei der die Ultraschalleinheiten selbst jeweils aus Gruppen von mehreren Einzelwandlern bestehen. Diese können bei mehrschichtigen Rohrwänden z.B. aus Faserverbundwerkstoffen direkt in die Rohrwandung integriert werden. Das Funktionsprinzip nutzt die Wandlergruppen, um, wie bei klassischen Clamp-On Anordnungen, durch Körperschallwellen gezielt Ultraschall abzustrahlen bzw. zu empfangen. Das hat, wie von sogenannten Clamp-On Konstruktionen bekannt, bei denen die Ultraschallwandler außen auf die Kanalwand montiert sind, den Vorteil, dass die Wandlereinheit nicht in den Strömungskanal hineinragt und somit die Strömung nicht gestört wird und keine Verschmutzungen auftreten können.

Ein weiterer Nachteil bei bekannten intrusiven Sonden tritt bei hohen Flussgeschwindigkeiten auf. Dieser ist anschaulich in EP 2 103 912 A1 in Figuren 3 und 4 dargestellt. Durch den Verwehungseffekt trifft das Ultraschallpaket je nach Flussgeschwindigkeit auf unterschiedliche Stellen auf der gegenüberliegenden Rohrwand und trifft womöglich nicht mehr auf die dort angeordnete Ultraschallwandlereinheit.

Aus Kang et al "Two-dimensional flexural ultrasonic phased array for flow measurement" in 2017 IEEE International Ultrasonics Symposium (IUS), Washington, DC, USA, 6-9 Sep 2017. Published in: 2017 IEEE International: Ultrasonics Symposium (IUS) ISSN 1948-5727, ist bekannt, dem oben genannten Verwehungseffekt durch sogenanntes "phased array beam steering" zu begegnen. Ein "phased array" besteht aus einzelnen Ultraschallwandlern, die zusammen in Überlagerung Ultraschallsignale abgeben, deren Abstrahlrichtung durch Änderung der einzelnen Phasen der Einzelsignale änderbar ist. Diese "phased array" Ultraschallwandlereinheiten werden in Öffnungen eines Strömungskanals eingesetzt.

Nachteilig an den aus dem Stand der Technik bekannten Differenzlaufzeitverfahren ist, dass für jeden Messpfad mindestens zwei Ultraschallwandlereinheiten benötigt werden. Zudem ist eine reziproke Elektronik oder vollständige Symmetrie, also ein exakt gleiches Verhalten der Ultraschallwandlereinheiten und der angeschlossenen Elektronik für Hin- und Rückrichtung notwendig, was die Komplexität der Vorrichtung weiter erhöht.

Weiterhin ist für die Bestimmung der Fluss- oder Strömungsgeschwindigkeit ein Dopplerverfahren bekannt. Hier wird die je nach Flussgeschwindigkeit unterschiedliche Frequenzverschiebung eines innerhalb des strömenden Fluids reflektierten Ultraschallsignals ausgewertet. Dabei wird nur ein die Ultraschallsignale aussendender und empfangender Ultraschallwandler verwendet. Eine Messung ist jedoch nur dann möglich, wenn genügend geeignete Streupartikel im Fluid vorhanden sind, die das Ultraschallsignal reflektieren.

Das Dokument US 2015/0020608 A1 beschreibt ein Durchflussmessgerät mit einer Anordnung von Ultraschallwandlerelementen, die dazu eingerichtet ist, eine erste Unteranordnung der Anordnung von Ultraschallwandlerelementen zu aktivieren, um mindestens zwei ausgehende Ultraschallstrahlen durch ein Fluid zu lenken, und eine zweite Unteranordnung der Anordnung von Ultraschallwandlerelementen zu aktivieren, um die Ultraschallstrahlen nach Durchlaufen eines Messpfades zu detektieren.

Ausgehend von diesem Stand der Technik ist es Aufgabe der Erfindung, eine verbesserte Vorrichtung zur Messung der Flussgeschwindigkeit eines Fluids bereitzustellen, die eine verminderte technische Komplexität aufweist und dennoch für die Messung von Fluiden geeignet ist, die keine oder nur eine geringe Anzahl von Streupartikeln enthalten.

Diese Aufgabe wird gelöst durch ein Durchflussmessgerät mit den Merkmalen des Anspruchs 1 und ein Verfahren zur Messung des Durchflusses eines Fluids mit den Merkmalen des Anspruchs 11.

Das erfindungsgemäße Durchflussmessgerät umfasst

- einen Messaufnehmer der eine Rohrleitung für das Fluid mit einer Rohrwand aufweist,
- wenigstens eine phased-array Ultraschallwandlereinheit, wobei eine phased-array Ultraschallwandlereinheit im Zusammenhang mit dieser Anmeldung Ultraschallwandlereinheiten umfasst, die Ultraschallsignale in verschiedene Winkel abstrahlen und Ultraschallsignale aus verschiedenen Winkeln empfangen können, insbesondere auch Anordnungen von lediglich zwei Ultraschallwandlern,
- eine Steuer- und Auswerteeinheit, die zur Ansteuerung der Ultraschallwandlereinheit zum Aussenden der Ultraschallsignale entlang eines Messpfades, zur Auswertung der empfangenen Utraschallsignale und zur Bestimmung eines Durchflusses unter Verwendung von Laufzeiten der Ultraschallsignale ausgebildet ist, wobei
- der Messaufnehmer wenigstens einen Reflektor aufweist, der dazu ausgebildet ist, die von der Ultraschallwandlereinheit ausgesendeten Ultraschallsignale zur Ultraschallwandlereinheit zurück zu reflektieren, wobei die Ultraschallsignale den Messpfad von der Ultraschallwandlereinheit zum Reflektor und zurück zur Ultraschallwandlereinheit auf wenigstens drei unterschiedlichen Pfadabschnitten durchlaufen

Der besondere Vorteil der Erfindung besteht darin, dass das erfindungsgemäße Durchflussmessgerät zur Bestimmung eines Durchflusses eines Fluids mittels Differenzlaufzeitverfahren lediglich eine Ultraschallwandlereinheit benötigt. Durch den Wegfall der üblicherweise notwendigen zweiten Ultraschallwandlereinheit verringert sich die Komplexität des Durchflussmessgeräts erheblich.

Das erfindungsgemäße Durchflussmessgerät kann so ausgebildet sein, dass die Ultraschallsignale in einer ersten Messung nach dem Aussenden durch die Ultraschallwandlereinheit zunächst wenigstens einmal von der Rohrwand der Rohrleitung reflektiert werden. Nach ein- oder mehrmaliger Reflexion an der Rohrwand treffen die Ultraschallsignale auf einen Reflektor, der die Ultraschallsignale zurück zur Ultraschallwandlereinheit reflektiert. Die Ultraschallsignale durchlaufen also einen Messpfad, der wenigstens drei unterschiedliche Pfadabschnitte aufweist, nämlich von der Ultraschallwandlereinheit zur Rohrwand, von der Rohrwand zum Reflektor und vom Reflektor zurück zur Ultraschallwandlereinheit. Bei mehr als einer Reflexion an der Rohrwand weist der Messpfad auch Pfadabschnitte von Rohrwand zu Rohrwand auf.

Zur Differenzmessung ist die Ultraschallwandlereinheit weiterhin ausgebildet, in einer zweiten Messung Ultraschallsignale so auszusenden, dass diese den Messpfad in umgekehrter Richtung durchlaufen, also zunächst von der Ultraschallwandlereinheit zum Reflektor, vom Reflektor zur Rohrwand und nach ein- oder mehrmaliger Reflexion an der Rohrwand zurück zur Ultraschallwandlereinheit. Aus der Differenz der in den beiden Messungen bestimmten Laufzeiten der Ultraschallsignale kann die Auswerteeinheit in bekannter Weise eine mittlere Flussgeschwindigkeit des Fluid berechnen.

In einer bevorzugten Ausführung des erfindungsgemäßen Durchflussmessgeräts verläuft der Pfadabschnitt zwischen Ultraschallwandlereinheit und Reflektor unter einem Pfadwinkel von weniger als 20 Grad, besonders bevorzugt weniger als 15 Grad zur Mittlelachse der Rohrleitung. Dies hat den Vorteil, dass das Ultraschallsignal in einem Bereich nahe der Rohrwand verläuft und auf diesem Pfadabschnitt geringer vom Durchfluss des Fluids beeinflusst wird als im Bereich der Mittlelachse der Rohrleitung, da Strömungsprofile von Fluidströmen in Rohrleitungen in der Regel im Bereich der Rohrwand eine deutlich geringere Flussgeschwindiglkeit aufweisen als im Bereich der Mittlelachse der Rohrleitung.

Die Ultraschallwandlereinheit kann vorteilhaft in die Rohrwand der Rohrleitung integriert sein. Dadurch wird der Durchfluss des Fluids nicht beeinflusst und unerwünschte Störungen, beispielsweise durch Verwirbelungen werden verhindert.

Der Reflektor kann bevorzugt in Strömungsrichtung nach der Ultraschallwandlereinheit angeordnet sein, so dass der Reflektor die Fluidströmumg im Bereich zwischen Ultraschallwandlereinheit und Reflektor nicht beeinflusst.

In einer Ausführungsform der Erfindung können die Ultraschallwandlereinheit und/oder der Reflektor zur Verminderung von Störungen der Fluidströmung in einer Vertiefung der Rohrwand angeordnet sein. Bevorzugt kann bei dieser Ausführungsform die Vertiefung zumindest teilweise verdeckt sein. Besonders bevorzugt sind dann lediglich Öffnungen zum Ein- und Austritt der Ultraschallsignale vorgesehen.

Da die Ultraschallwandlereinheit als phased-array ausgebildet ist, kann sie Ultraschallsignale unter einem ersten Winkel aussenden und unter einem zweiten Winkel, der sich vom ersten Winkel unterscheidet, empfangen. Die Ultraschallwandlereinheit ist dabei so ausgerichtet, dass Ultraschallsignale unter einem betragsmäßig gleichen Winkel ausgesendet und nach Durchlaufen des Messpfades wieder empfangen werden. Durch eine solche Symmetrie wird die weitere Verarbeitung der Empfangsdaten vereinfacht.

In einer Ausgestaltung der Erfindung kann die Ultraschallwandlereinheit als lineares Array bestehend aus einer Zeile von wenigstens zwei Ultraschallwandlern ausgebildet sein, deren Ausrichtung parallel zum Messpfad ist. Das ermöglicht, einem Verwehungseffekt über die Ansteuerung der Ultraschallwandler bezüglich ihrer Phase und damit entsprechendes Nachführen des Abstrahlwinkels zu begegnen. So können bessere Messergebnisse über einen großen Flussgeschwindigkeitsbereich erfasst werden. Die phased-array Ultraschallwandlereinheit kann dann den Verweheffekt online berücksichtigen und die Richtung der Abstrahlung der Ultraschallpakete der Flussgeschwindigkeit anpassen.

In Weiterbildung der Erfindung kann die Ultraschallwandlereinheit auch als zweidimensionales Array ausgebildet sein, wobei die einzelnen Ultraschallwandler vorzugsweise in Reihen und Spalten angeordnet sind. Damit ist eine größere Flexibilität bezüglich der möglichen Messpfade gegeben. Insbesondere lassen sich mit einem zweidimensionalen Array als Sekantenpfade ausgebildete Messpfade realisieren.

Die Ultraschallwandlereinheit kann auch dazu ausgebildet sein, Ultraschallsignale mit unterschiedlichen Abstrahlwinkeln gleichzeitig auszusenden und die reflektieren Ultraschallsignale gleichzeitig unter verschiedenen Empfangswinkeln zu empfangen, wobei die empfangenen Ultraschallsignale entweder durch digitale Nachverarbeitung voneinander getrennt werden können und somit die Differenzlaufzeit ermittelt werden kann oder die Interferenz der empfangenen Ultraschallsignale ausgewertet werden und aus dem Signalbild die Differenzlaufzeit ermittelt werden kann.

Falls im Fluid eine ausreichende Partikelanzahl vorhanden ist, um die eingangs erwähnte Doppler-Messung zur Bestimmung der Flussgeschwindigkeit durchzuführen, kann das erfindungsgemäße Durchflussmessgerät auch dazu ausgebildet sein, beide Verfahren durchzuführen um somit eine höhere Genauigkeit bei der Bestimmung der Flussgeschwindigkeit zu erreichen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden abhängigen Ansprüchen beschrieben

Im Folgenden wird die Erfindung anhand von Ausführungsbeispielen unter Bezugnahme auf die Zeichnung im Einzelnen erläutert. In der Zeichnung zeigen:

Fig. 1          eine schematische Darstellung eines erfindungsgemäßen Durchflussmessgeräts;

Fig. 2a        eine schematische Draufsicht einer als zweidimensionales Array ausgeführten Ultraschallwandlereinheit;

Fig. 2b        eine schematische Seitenansicht einer als zweidimensionales Array ausgeführten Ultraschallwandlereinheit;

Fig. 3          eine schematische Darstellung einer alternativen Ausführungsform des erfindungsgemäßen Durchflussmessgeräts;

Fig. 4          eine schematische Darstellung einer alternativen Ausführungsform des erfindungsgemäßen Durchflussmessgeräts zur Mehrpfadmessung;

Fig. 5a - 5c   schematische Darstellungen von Abschirmungen eines Messpfades in einem erfindungsgemäßen Durchflussmessgerät;

Fig. 6          eine schematische Darstellung einer weiteren Ausführungsform des erfindungsgemäßen Durchflussmessgeräts;

Fig. 7          eine schematische Darstellung eines Durchflussmessgeräts nach dem Stand der Technik;

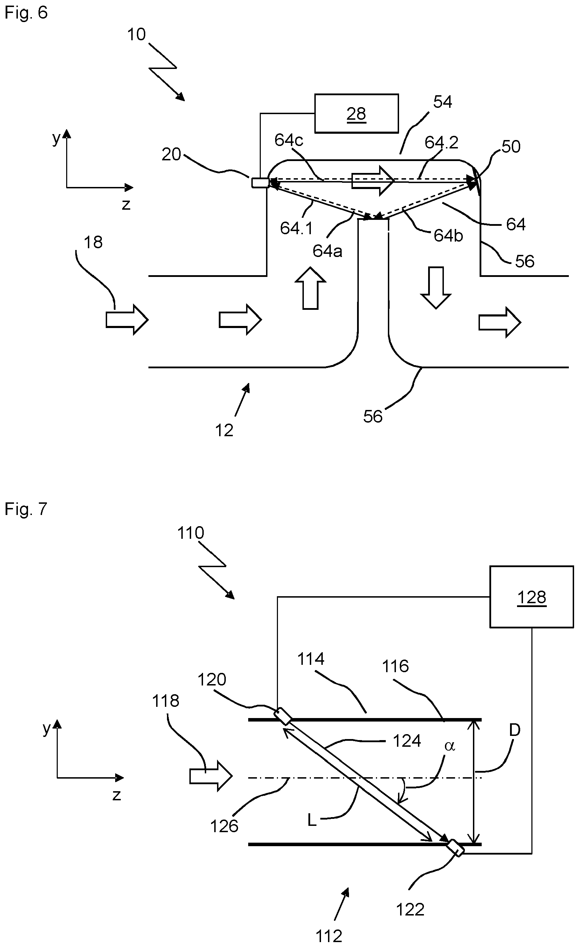

In Fig. 7 ist ein Durchflussmessgerät 110 nach dem Stand der Technik zur allgemeinen Erläuterung der Funktion eines gattungsgemäßen Durchflussmessgeräts dargestellt. Das Durchflussmessgerät 110 umfasst einen Messaufnehmer 112, der eine Rohrleitung 114 für das Fluid 118 mit einer Rohrwand 116 aufweist. Das durch die Rohrleitung 114 strömende Fluid, ein Gas oder eine Flüssigkeit, ist in Fig. 7 mit einem breiten Pfeil dargestellt und strömt in z-Richtung entlang einer Mittelachse 126 der Rohrleitung 114.

Weiter weist das Durchflussmessgerät 110 zwei Ultraschallwandler 120 und 122 auf, die zwischen sich in der Rohrleitung 114 einen Messpfad 124 definieren. Die Ultraschallwandler 120 und 122 sind in Strömungsrichtung z versetzt angeordnet, also in Längsrichtung entlang der Mittelachse 126 der Rohrleitung 114 beabstandet.

Dadurch liegt der Messpfad 124 nicht orthogonal zur Strömungsrichtung z, sondern in einem Pfadwinkel $\alpha$. Jede der Ultraschallwandlereinheiten 120 und 122 kann als Sender oder Empfänger arbeiten und wird von einer Steuer- und Auswerteeinheit 128 gesteuert.

Aus dem Pfadwinkel $\alpha$ und dem Rohrdurchmesser D ergibt sich die Länge L des Messpfades 124 im fluiden Medium. Ultraschallsignale, die als Ultraschallwellenpakete auf dem Messpfad 124 in entgegengesetzte Richtungen ausgesandt und empfangen werden, haben also einmal eine Komponente in Richtung der Strömungsrichtung z und ein anders Mal entgegen der Strömungsrichtung z und werden somit mit der Strömung des Fluids 118 beschleunigt bzw. entgegen der Strömung abgebremst. Die mittlere Flussgeschwindigkeit v des Fluids berechnet sich in diesem Laufzeitverfahren nach

$$v = \frac{t_2 - t_1}{2 * t_2 * t_1} * \frac{L}{\cos(\alpha)}$$

worin $t_2$ und $t_1$ die Schalllaufzeiten bezeichnen, die von den abgestrahlten Ultraschallwellensignalen benötigt werden, um den Messpfad 124 stromauf- bzw. stromabwärts zurückzulegen und in der Steuer- und Auswerteeinheit 128 erfasst werden. Mit dem Rohrquerschnitt und der mittleren Flussgeschwindigkeit v des Fluids 118 lässt sich dann der Durchfluss berechnen.

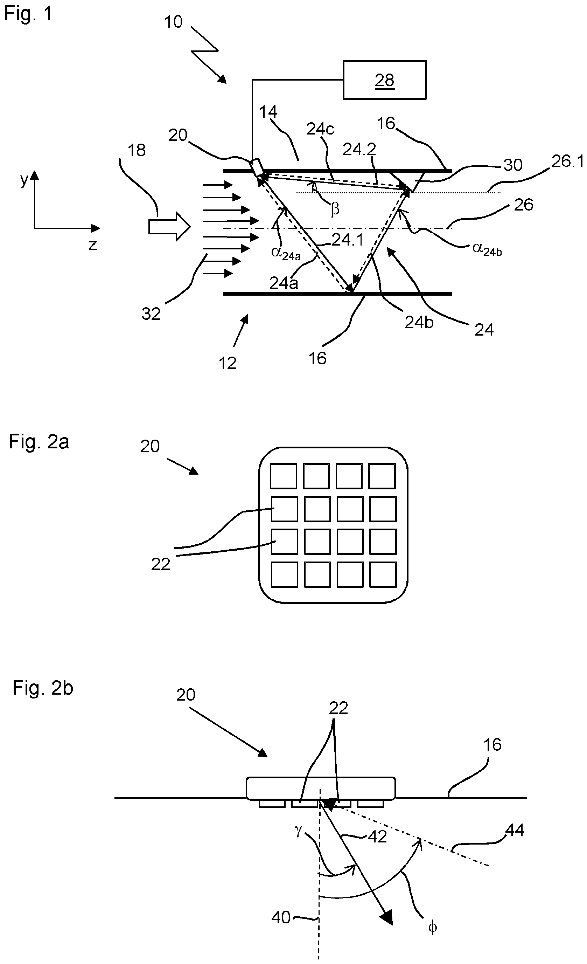

Nach diesem Prinzip arbeitet auch das erfindungsgemäße Durchflussmessgerät 10, das in Fig. 1 sehr schematisch dargestellt ist. Es weist ebenso einen Messaufnehmer 12 mit Rohrleitung 14 und Rohrwand 16 sowie eine Steuer- und Auswerteeinheit 28 auf. Das durch die Rohrleitung 14 strömende Fluid 18, ein Gas oder eine Flüssigkeit, ist mit einem breiten Pfeil dargestellt und strömt in z-Richtung entlang einer Mittelachse 26 der Rohrleitung 14. Das strömende Fluid 18 weist ein Strömungsprofil 32 auf, welches Ultraschallsignale, die sich entlang der Rohrwand 16 ausbreiten, nur wenig beeinflusst, beispielsweise wegen einer niedrigeren Flussgeschwindigkeit des Fluids 18 im Bereich der Rohrwand 16 verglichen mit einer Flussgeschwindigkeit im Bereich der Mittelachse 26.

Im Unterschied zum Stand der Technik weist die erfindungsgemäße Vorrichtung zur Messung eines Durchflusses eines Fluids lediglich eine Ultraschallwandlereinheit 20 in der Rohrwand 16 auf. Die Ultraschallwandlereinheit 20 ist zudem kein "einfacher" Ultraschallwandler, sondern ist als phased-array Ultraschallwandlereinheit 20 ausgebildet. Aufbau und Funktionsweise einer derartigen phased-array Ultraschallwandlereinheit sind aus dem Stand der Technik bekannt und nicht Bestandteil der Erfindung. Sie werden im Folgenden anhand der Figuren 2a und 2b weiter erläutert, um das Verständnis der Erfindung zu erleichtern. Die Ultraschallwandlereinheit kann als eindimensionales, lineares Array bestehend aus einer Zeile von wenigstens zwei einzeln ansteuerbaren Ultraschallwandlern ausgebildet sein, deren Ausrichtung parallel zum Messpfad 24 ist oder wie in der schematischen Draufsicht der Fig. 2a dargestellt als zweidimensionales Array von einzeln ansteuerbaren Ultraschallwandlern 22. Die einzelnen Ultraschallwandler 22 werden zum Abstrahlen eines Ultraschallsignals von der Steuer- und Auswerteeinheit 28 so angesteuert, dass sie untereinander jeweils einen Phasenversatz aufweisen, wobei der Phasenversatz so gewählt ist, dass die Überlagerung der daraus resultierenden Ultraschallwellen zu einem Ultraschallwellensignal führt, das die Ultraschallwandlereinheit 20 unter einem Abstrahlwinkel $\gamma$ zu einer Flächennormale 40 der Ultraschallwandlereinheit 20 verlässt, wie in Figur 2b gezeigt, in der das ausgestrahlte Ultraschallwellensignal durch eine durchgezogene Linie 42 dargestellt ist. Die Ultraschallwandlereinheit 20 kann weiterhin so angesteuert werden, dass Ultraschallwellensignale, die unter einem Einfallswinkel $\phi$ auf die Ultraschallwandlereinheit 20 treffen (in Figur 2b dargestellt durch die strichpunktierte Linie 44), detektiert werden. Abstrahlwinkel $\gamma$ und Einfallswinkel $\phi$ können sich sowohl vom Betrag als auch in der Richtung unterscheiden. Wie bereits oben angemerkt, ist die Funktionsweise derartiger phased-array Ultraschallwandlereinheiten aus dem Stand der Technik bekannt.

In der Fig. 2a ist exemplarisch ein Array von vier mal vier Ultraschallwandlern dargestellt. Diese Beschränkung ist im Wesentlichen dadurch bedingt, dass die Zeichnung einfach und übersichtlich bleiben soll. Wenn 16 solcher einzelner Ultraschallwandler einen zu geringen Signalpegel liefern, kann das Array auch mehr Ultraschallwandler aufweisen. Bevorzugt ist deshalb das Array in nicht dargestellter Weise mit mehr Ultraschallwandlern ausgebildet. Die Anzahl an Ultraschallwandlern ist ein Kompromiss zwischen Signalstärke, Komplexität und Kosten.

Die Ultraschallwandlereinheit 20 sendet und empfängt also Ultraschallsignale, die sich entlang eines Messpfades 24 durch die Rohrleitung 14 bewegen. Wie in Fig. 1 gezeigt, weist der Messpfad 24 dabei mehrere Pfadabschnitte 24a, 24b, 24c auf.

In einer ersten Messung sendet die Ultraschallwandlereinheit 20 die Ultraschallsignale entlang eines ersten Pfadabschnitts 24a des Messpfades 24 von der Ultraschallwandlereinheit 20 zur Rohrwand 16 aus, wobei die Laufrichtung der Ultraschallsignale bei der ersten Messung in der Fig. 1 durch durchgezogene Pfeile 24.1 gekennzeichnet ist. Nach einer Reflexion an der Rohrwand 16 gelangen die Ultraschallsignale entlang eines zweiten Pfadabschnitts 24b von der Rohrwand 16 zu einem Reflektor 30, der die Ultraschallsignale entlang eines dritten Pfadabschnitts 24c zur Ultraschallwandlereinheit 20 zurück reflektiert. Der Reflektor 30 ist in Strömungsrichtung 18 des Fluids stromabwärts, also nach der Ultraschallwandlereinheit 20, an oder in der Rohrwand angeordnet, so dass die Strömung des Fluids im Bereich zwischen Ultraschallwandlereinheit 20 und Reflektor 30 nur wenig bis gar nicht gestört wird, insbesondere, wenn die Ultraschallwandlereinheit 20 bündig in die Rohrwand 16 integriert ist (nicht gezeigt).

In einer zweiten Messung sendet die Ultraschallwandlereinheit 20 die Ultraschallsignale in umgekehrter Laufrichtung, gekennzeichnet durch die gestrichelten Pfeile 24.2, entlang des dritten Pfadabschnitts 24c des Messpfades 24 in Richtung des Reflektors 30 aus. Nach Reflexion am Reflektor 30 gelangen die Ultraschallsignale entlang des zweiten Pfadabschnitts 24b zur Rohrwand 16, von der sie entlang des ersten Pfadabschnitts 24a zur Ultraschallwandlereinheit 20 zurück reflektiert werden.

Die Ultraschallwandlereinheit 20 und der Reflektor 30 sind so angeordnet, dass der dritte Pfadabschnitt 24c des Messpfades 24 zwischen Ultraschallwandlereinheit 20 und Reflektor 30 unter einem Pfadwinkel β von weniger als 20 Grad, bevorzugt weniger als 15 Grad zur Mittlelachse 26 verläuft wobei der Pfadwinkel β zwischen Mittelachse 26 und drittem Pfadabschnitt 24c hier in Bezug zu einer Parallelen 26.1 der Mittelachse 26 angegeben ist. Der der dritte Pfadabschnitt 24c verläuft daher in einem Bereich möglichst nah an der Rohrwand 16. Aufgrund des Strömungsprofils 32 in der Rohrleitung 14, wird das Ultraschallsignal somit auf dem dritten Pfadabschnitt 24c zwischen der Ultraschallwandlereinheit 20 und dem Reflektor 30 von der Fluidströmung nur wenig beeinflusst.

Auf dem ersten Pfadabschnitt 24a zwischen Ultraschallwandlereinheit 20 und Rohrwand 16 und auf dem zweiten Pfadabschnitt 24b zwischen Rohrwand 16 und Reflektor 30 wird das Ultraschallsignal dagegen stark vom Strömungsprofil 32 und der Geschwindigkeit des Fluids in der Rohrleitung beeinflusst. Dadurch ist die Laufzeit der Ultraschallsignale gegen die Flussrichtung, die mit der zweiten Messung gemessen wird (durch gestrichelte Pfeile dargestellter Messpfad), länger als die Laufzeit mit der Flussrichtung, die mit der ersten Messung gemessen wird (durch durchgezogene Pfeile dargestellter Messpfad). Damit ist es möglich, über die Auswertung der Differenzlaufzeit beider Messungen die mittlere Flussgeschwindigkeit des Mediums zu berechnen.

Die mittlere Flussgeschwindigkeit v des Fluids berechnet sich in diesem Laufzeitverfahren nach

$$v = \frac{(L_{24a} + L_{24b} + L_{24c})^2}{2 \cdot (L_{24a} \cos \alpha_{24a} + L_{24b} \cos \alpha_{24b} + C_v L_{24c} \cos \text{ß})} \cdot \frac{t_{24.2} - t_{24.1}}{t_{24.1} t_{24.2}}$$

Dabei bezeichnen

$t_{24.1}$ und $t_{24.2}$ die Schalllaufzeiten, die von den abgestrahlten Ultraschallsignalen benötigt werden, um den Messpfad 24 in der ersten Laufrichtung 24.1 und in umgekehrter Laufrichtung 24.2 zurückzulegen;

$L_{24a}$, $L_{24b}$, $L_{24c}$ die Längen der Pfadabschnitte 24a, 24b, 24c,

$\alpha_{24a}$, $\alpha_{24b}$ die Pfadwinkel des ersten Pfadabschnitts 24a und des zweiten Pfadabschnitts 24b zur Mittlelachse 26;

β den Pfadwinkel des dritten Pfadabschnitts 24c zur Mittelachse 26;

$C_v$ einen vom Strömungsprofil und damit von der Strömungsgeschwindigkeit abhängigen Korrekturfaktor, der durch Messung, Kalibrierung oder Simulation bestimmt werden kann;

Mit dem Rohrquerschnitt und der mittleren Flussgeschwindigkeit v des Fluids 18 lässt sich dann der Durchfluss berechnen.

Der Korrekturfaktor $C_v$ lässt sich beispielsweise derart bestimmen, dass in einem Kalibriervorgang bei einer oder mehreren verschiedenen vorgegebenen mittlerern Flussgeschwindigkeiten v die Schalllaufzeiten $t_{24.1}$ und $t_{24.2}$ gemessen und der Korrekturfaktor $C_v$ durch Umstellen der obigen Gleichung berechnet wird. Die Messung mehrerer verschiedener Flussgeschwindigkeiten ist dabei bevorzugt, da auch das Strömungsprofil 32 von der Flussgeschwindigkeit abhängig sein kann. Alternativ kann der Korrekturfaktor $C_v$ auch durch fachübliche Simulation der Schalllaufzeiten $t_{24.1}$ und $t_{24.2}$ der Ultraschallsignale unter Berücksichtigung eines ebenfalls fachüblich simulierten, flussgeschwindigkeitabhängigen Strömungprofils berechnet werden. Der vom Strömungsprofil und damit auch von der Strömungsgeschwindigkeit abhängige Korrekturfaktor $C_v$ kann also als eine Funktion der Schalllaufzeiten $t_{24.1}$ und $t_{24.2}$ angegeben werden.

Da die Ultraschallwandlereinheit 20 als phased array ausgebildet ist, kann über die Ansteuerung der einzelnen Ultraschallwandler 22 mittels der Steuer- und Auswerteeinheit 28 der Abstrahlwinkel γ verändert werden. Dadurch kann einem Verwehungseffekt, insbesondere bei hohen Flussgeschwindigkeiten, entgegengewirkt werden. Der Abstrahlwinkel γ kann nämlich so nachgeregelt werden, dass unabhängig von der Flussgeschwindigkeit stets der Reflektor 30 getroffen wird, und die ausgesandten Ultraschallsignale wieder zur Ultraschallwandlereinheit 20 zurück reflektiert werden.

Durch die Ausgestaltung der Ultraschallwandlereinheit 20 als phased-array hängt der Abstrahlwinkel γ von der von der eingestellten Phasenverschiebung der einzelnen Signale und von der Schallgeschwindigkeit im Fluid ab. Die Schallgeschwindigkeit selbst ist abhängig von Umgebungsbedingungen wie Temperatur und Druck. Deshalb ist es vorteilhaft, dass über die Ansteuerung der einzelnen Ultraschallwandler 22 mittels der Steuer- und Auswerteeinheit 28 die Phasendifferenz in Abhängigkeit der Umgebungsbedingungen so angepasst werden kann, dass der Abstrahlwinkel γ gleichbleibt, auch wenn die Schallgeschwindigkeit sich ändert. Zur Bestimmung der Umgebungsbedingungen kann eine Umgebungserfassungseinheit (nicht gezeigt) vorgesehen sein, die z.B. Temperatur und/oder Druck in der Rohrleitung 14 erfasst und an die Steuer- und Auswerteeinheit 28 weiterleitet, um die Fluideigenschaften zu überwachen und damit die Schallgeschwindigkeit und Dichte berechnen zu können. Mit diesen Kenntnissen können die Ultraschallwandler 22 besser angesteuert bzw. ausgewertet werden. Die Dichte ist notwendig, um den Massenfluss zu berechnen und kann aus den Eigenschaften des Mediums, sowie Temperatur und Druck berechnet werden. Die Schallgeschwindigkeit selbst kann initial bei bekannten Umgebungsbedingungen, ruhendem Fluid und bekannter Länge des Messpfades gemessen werden, indem für beide Laufrichtungen des Ultraschallsignals entlang des Messpfades eine Laufzeit gemessen, daraus eine mittlere Laufzeit bestimmt und die Länge des Messpfades durch die mittlere Laufzeit geteilt wird:

$$c = \frac{L}{\frac{(t_1 + t_2)}{2}}$$

Mit:

c= Schallgeschwindigkeit
L = Länge des Messpfades
$t_1$ = Laufzeit des Ultraschallsignals entlang des Messpfades in erster Richtung
$t_2$ = Laufzeit des Ultraschallsignals entlang des Messpfades in zweiter Richtung

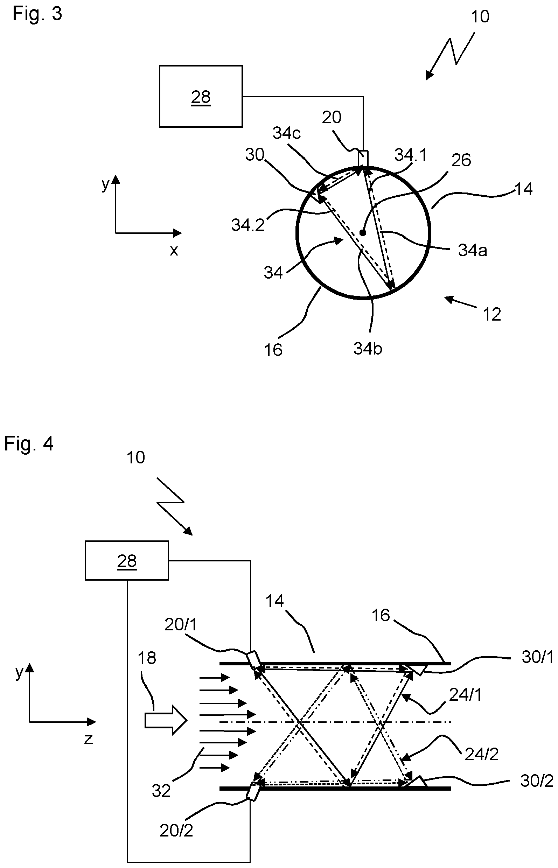

Der Messpfad 24 ist in Fig. 1 als diametraler Messpfad dargestellt, der durch eine Mittelachse 26 der Rohrleitung 14 verläuft. Er kann aber auch als Sekantenpfad ausgebildet sein wie in Fig. 3 gezeigt wird.

Fig. 3 zeigt in einer alternativen Ausführung der Erfindung die Rohrleitung 14 in Strömungsrichtung. Die Ultraschallwandlereinheit 20 sendet Ultraschallsignale auf einem Messpfad 34 aus, der nun nicht diametral durch die Mittelachse 26 der Rohrleitung 14 verläuft, sondern als sogenannter Sekantenpfad mit den Pfadabschnitten 34a, 34b, 34c. Zusätzlich verläuft der Messpfad 34 wie im Ausführungsbeispiel aus Fig. 1 nicht orthogonal zur Strömungsrichtung 18, also aus der Zeichnungsebene heraus oder in die Zeichnungsebene hinein. Die Verwendung von Sekantenpfaden ist vorteilhaft bei unsymmetrischen Geschwindigkeitsverteilungen. Da die Pfadabschnitte 34a, 34b, 34c des Messpfads 34 nicht durch die Mittelachse 26 der Rohrleitung 14 verlaufen, sind höhere Genauigkeiten bei der Bestimmung der mittleren Flussgeschwindigkeit möglich. Besonders bevorzugt kann eine Mehrpfadmessung stattfinden, wobei die Ultraschallwandlereinheit 20 Ultraschallsignale unter verschiedenen Winkeln aussendet, so dass die Ultraschallsignale die Rohrleitung 14 auf unterschiedlichen Messpfaden durchlaufen, wobei mehrere Reflektoren 30 an oder in der Rohrwand angeordnet sein können.

Grundsätzlich ist für eine Mehrpfadmessung auch die Verwendung mehrerer Ultraschallwandlereinheiten möglich wie in Fig. 4 gezeigt. Zusätzlich zu einer ersten Ultraschallwandlereinheit 20/1, die Ultraschallsignale entlang eines Messpfades 24/1 aussendet und empfängt, wobei die Ultraschallsignale an einem ersten Reflektor 30/1 reflektiert werden, weist das Durchflussmessgerät 10 eine zweite Ultraschallwandlereinheit 20/2 auf, die Ultraschallsignale entlang eines zweiten Messpfades 24/2 aussendet und empfängt, wobei die Ultraschallsignale an einem zweiten Reflektor 30/2 reflektiert werden. Je nach Genauigkeitsanforderung an die Durchflussmessung kann eine Vielzahl von N Ultraschallwandlereinheiten verwendet werden, die N Messpfade aufspannen. Anstelle von N Reflektoren kann dann beispielsweise auch ein Reflektor vorgesehen sein, der als umlaufende Erhebung oder Nut der Rohrwand 16 ausgebildet ist.

In den in Fig. 1, Fig. 3 und Fig. 4 gezeigten Ausführungsbeispielen erfolgt jeweils eine einfache Reflexion der Ultraschallsignale an der Rohrwand 16. Zur weiteren Erhöhung der Messgenauigkeit, können die Messpfade 24, 34 auch so ausgelegt sein, dass die Ultraschallsignale zwischen Ultraschallwandlereinheit 20 und Reflektor 30 mehrfach an der Rohrwand 16 reflektiert werden. Bevorzugt verlaufen die Pfadabschnitte 24c, 34c, auf denen die Ultraschallsignale direkt, also ohne Reflexion an der Rohrwand 16 vom Reflektor 30 zur Ultraschallwandlereinheit 20 gelangen (oder in umgekehrter Laufrichtung von der Ultraschallwandlereinheit 20 direkt zum Reflektor) wie oben erläutert in einem Bereich nahe an der Rohrwand 16.

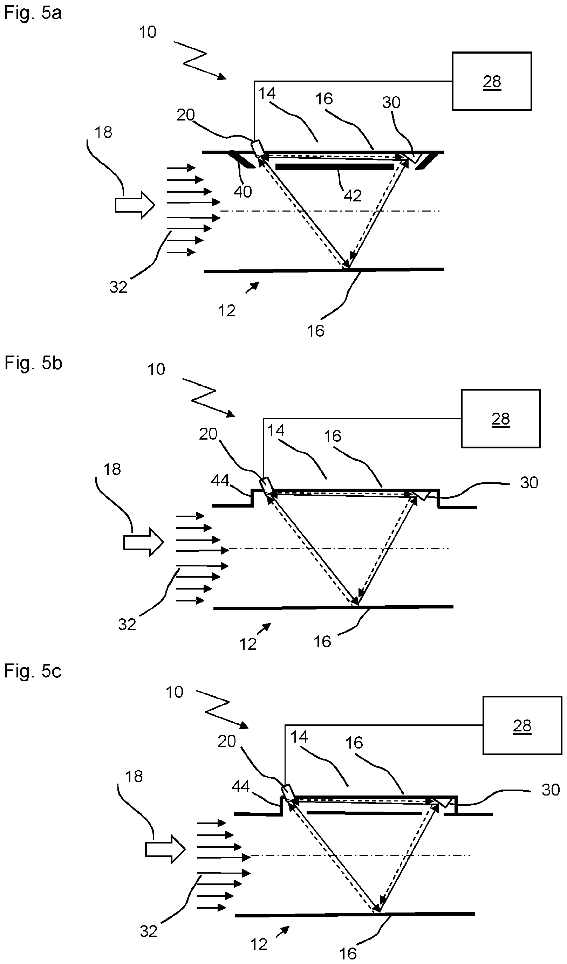

Zur weiteren Verminderung des Einflusses der Fluidströmung auf die direkt zwischen Ultraschallwandlereinheit 20 und Reflektor 30 verlaufenden Ultraschallsignale können diese durch verschiedene Ausführungen vom Fluidstrom abgeschirmt werden, die in den folgenden Figuren 5a - 5c gezeigt sind.

Fig. 5a zeigt eine mechanische Abschirmung 40, 42, die den Bereich zwischen Ultraschallwandlereinheit 20 und Reflektor 30 im Wesentlichen einhaust, und lediglich Öffnungen zum Ein- und Austritt der Ultraschallsignale aufweist.

Fig. 5b zeigt eine alternative Ausführung, bei der die Ultraschallwandlereinheit 20 und der Reflektor 30 in einer Vertiefung 44 der Rohrwand angeordnet sind.

Zur weiteren Abschirmung kann die Vertiefung 44 wie in Figur 5c gezeigt bis auf Öffnungen zum Ein- und Austritt der Ultraschallsignale verschlossen sein, vergleichbar zum Ausführungsbeispiel in Fig. 3a. Die Einbuchtung 44 kann auch als ein an eine Öffnung in der Rohrwand 16 anflanschbares, die Ultraschallwandlereinheit 20 und den Reflektor 30 beinhaltendes Messmodul ausgelegt sein.

Eine weitere, alternative Ausführungsform der Erfindung zeigt Fig. 6. Die Ultraschallwandlereinheit 20 sendet und empfängt Ultraschallsignale, die sich entlang eines Messpfades 64 durch die Rohrleitung 54 bewegen. Wie in den vorherigen Ausführungsbeispielen, weist der Messpfad 64 dabei mehrere Pfadabschnitte 64a, 64b, 64c auf.

Im Unterschied zu den Ausführungsbeispielen in Fig. 1 und Fig. 3 wird der Reflektor 60 zum Zurückreflektieren der Ultraschallsignale durch die Rohrwand 56 der Rohrleitung 54 selbst gebildet. Die Rohrleitung 54 weist dabei eine u-förmige Windung auf.

In einer ersten Messung sendet die Ultraschallwandlereinheit 20 die Ultraschallsignale entlang eines ersten Pfadabschnitts 64a des Messpfades 64 aus, wobei die Laufrichtung der Ultraschallsignale bei der ersten Messung durch durchgezogene Pfeile 64.1 gekennzeichnet ist. Nach einer Reflexion an der Rohrwand 56 gelangen die Ultraschallsignale entlang eines zweiten Pfadabschnitts 64b zu einem Reflektor 60, der durch die Rohrwand 56 gebildet wird und die Ultraschallsignale entlang eines dritten Pfadabschnitts 64c zur Ultraschallwandlereinheit 20 zurück reflektiert.

In einer zweiten Messung, sendet die Ultraschallwandlereinheit 20 die Ultraschallsignale in umgekehrter Laufrichtung, gekennzeichnet durch die gestrichelten Pfeile 64.2, entlang des dritten Pfadabschnitts 64c des Messpfades 64 in Richtung des Reflektors 60 aus. Nach Reflexion am Reflektor 60 gelangen die Ultraschallsignale entlang des zweiten Pfadabschnitts 64b zur Rohrwand 56, von der sie entlang des ersten Pfadabschnitts 64a zur Ultraschallwandlereinheit 20 zurück reflektiert werden.

Durch die u-förmige Geometrie der Rohrleitung 54 läuft der Messpfad 64 so durch das Fluid 18, dass der dritte Pfadabschnitt 64c im Wesentlichen parallel zur Strömung des Fluids 18 verläuft, während die anderen beiden Pfadabschnitte 64a, 64b im Wesentlichen senkrecht zur Strömung des Fluids 18 verlaufen. Somit wird die Ausbreitungsgeschwindigkeit der Ultraschallsignale auf den ersten und zweiten Pfadabschnitten 64a, 64b nur wenig von der Fluidströmung beeinflusst.

Auf dem dritten Pfadabschnitt 64c zwischen Ultraschallwandlereinheit 20 und Reflektor 60 wird das Ultraschallsignal stark von der Fluidströmung und der Geschwindigkeit des Fluids in der Rohrleitung 54 beeinflusst. Dadurch ist die Laufzeit der Ultraschallsignale gegen die Flussrichtung, die mit der zweiten Messung gemessen wird (durch gestrichelte Pfeile dargestellter Messpfad), länger als die Laufzeit mit der Flussrichtung, die mit der ersten Messung gemessen wird (durch durchgezogene Pfeile dargestellter Messpfad). Damit ist es auch mit dieser Ausführungsform der Erfindung möglich, über die Auswertung der Differenzlaufzeit beider Messungen die mittlere Flussgeschwindigkeit des Fluids 18 zu berechnen.

**Patentansprüche**

1.  Durchflussmessgerät zur Messung eines Durchflusses eines Fluids (18) mit

    - einem Messaufnehmer (12) der eine Rohrleitung (14) für das Fluid (18) mit einer Rohrwand (16) aufweist,
    - wenigstens einer phased-array Ultraschallwandlereinheit (20) mit in einem planen, eine Flächennormale (40) aufweisenden Array angeordneten Ultraschallwandlern (22), die Ultraschallsignale in verschiedene Abstrahlwinkel (y) abstrahlen und Ultraschallsignale aus verschiedenen Empfangswinkeln ($\phi$) empfangen kann
    - einer Steuer- und Auswerteeinheit (28), die zur Ansteuerung der Ultraschallwandlereinheit (20) zum Aussenden der Ultraschallsignale entlang eines Messpfades (24, 34, 64) und zur Auswertung der empfangenen Utraschallsignale und Bestimmung eines Durchflusses unter Verwendung von Laufzeiten der Ultraschallsignale ausgebildet ist, wobei der Messaufnehmer (12) wenigstens einen Reflektor (30, 50) aufweist, der dazu ausgebildet ist, die von der Ultraschallwandlereinheit (20) ausgesendeten Ultraschallsignale zur selben Ultraschallwandlereinheit (20) zurück zu reflektieren und die Ultraschallsignale den Messpfad (24, 34, 64) von der Ultraschallwandlereinheit (20) zum Reflektor (30, 50) und zurück zur Ultraschallwandlereinheit (20) auf wenigstens drei unterschiedlichen Pfadabschnitten (24a, 24b, 24c, 34a, 34b, 34c, 64a, 64b, 64c,) durchlaufen.

    **dadurch gekennzeichnet,**
    **dass** die Ultraschallwandlereinheit (20) so ausgerichtet ist, dass die Ultraschallsignale unter betragsmäßig gleichen Abstrahlwinkeln (y) und Einfallswinkeln ($\phi$) in Bezug auf die Flächennormale (40) ausgesendet und nach Durchlaufen des Messpfades (24, 34) wieder empfangen werden.

2.  Vorrichtung nach Anspruch 1, **dadurch gekennzeichnet, dass** die Steuer- und Auswerteeinheit (28) dazu ausgebildet ist, die Ultraschallwandlereinheit (20) derart anzusteuern, dass die Ultraschallsignale in einer ersten Laufzeitmessung den Messpfad (24, 34, 64) in einer ersten Richtung (24.1, 34.1, 64.1) und in einer zweiten Laufzeitmessung in einer der ersten Richtung entgegengesetzten zweiten Richtung (24.2, 34.2, 64.2) durchlaufen, und aus einer Differenz der Laufzeitmessungen eine mittlere Flussgeschwindigkeit (v) des Fluids (18) zu bestimmen.

3.  Vorrichtung nach einem der vorhergehenden Ansprüche, **dadurch gekennzeichnet, dass** die Ultraschallwandlereinheit (20) in der Rohrwand (16) integriert ist.

4. Vorrichtung nach einem der vorhergehenden Ansprüche, **dadurch gekennzeichnet, dass** der Reflektor (30, 50) in Strömungsrichtung des Fluids (18) nach der Ultraschallwandlereinheit (20) angeordnet ist

5. Vorrichtung nach einem der vorhergehenden Ansprüche, **dadurch gekennzeichnet, dass** der Reflektor (30) und/oder die Ultraschallwandlereinheit (20) in einer Vertiefung (44) der Rohrwand (16) angeordnet sind.

6. Vorrichtung nach Anspruch 5, **dadurch gekennzeichnet, dass** die Vertiefung (44) zumindest teilweise verdeckt ist.

7. Vorrichtung nach einem der vorhergehenden Ansprüche, **dadurch gekennzeichnet, dass** der zwischen Reflektor (30) und Ultraschallwandlereinheit (20) liegende Pfadabschnitt (24c, 34c) des Messpfades (24, 34) unter einem Pfadwinkel ($\beta$) von weniger als 20 Grad, bevorzugt weniger als 15 Grad, zur Mittlelachse (26) der Rohrleitung (14) verläuft.

8. Vorrichtung nach einem der vorhergehenden Ansprüche, **dadurch gekennzeichnet, dass** die Steuer- und Auswerteeinheit (28) dazu ausgebildet ist, die Ultraschallwandlereinheit zum Nachführen des Abstrahlwinkels ($\gamma$) in Abhängigkeit der mittleren Flussgeschwindigkeit (v) des Fluids (18) anzusteuern.

9. Vorrichtung nach einem der vorhergehenden Ansprüche, **dadurch gekennzeichnet, dass** die Ultraschallwandlereinheit (20) als eindimensionales Array bestehend aus einer Zeile mit wenigstens zwei Ultraschallwandlern (22) ausgebildet ist, wobei die Zeile parallel zum Messpfad (24) ausgerichtet ist

10. Vorrichtung nach einem der Ansprüche 1 bis 8, **dadurch gekennzeichnet, dass** die Ultraschallwandlereinheit (20) als zweidimensionales Array von Ultraschallwandlern (22) ausgebildet ist.

11. Verfahren zur Messung eines Durchflusses eines in einer Rohrleitung (14) strömenden Fluids (18) mit den Schritten:

  - Aussenden von Ultraschallsignalen entlang eines Messpfades (24, 34, 64) in der Rohrleitung (14) mit einer von einer Steuer- und Auswerteeinheit (28) angesteuerten phased-array Ultraschallwandlereinheit (20) mit in einem planen, eine Flächennormale (40) aufweisenden Array angeordneten Ultraschallwandlern (22).
  - Empfangen der ausgesendeten Ultraschalsignale mit derselben Ultraschallwandlereinheit (20) nach Durchlaufen des Messpfades (24, 34. 64).
  - Auswerten der empfangenen Utraschallsignale und Bestimmen eines Durchflusses des Fluids (18) unter Verwendung von Laufzeiten der Ultraschallsignale mit der Steuer- und Auswerteeinheit (28)
  - wobei die von der Ultraschallwandlereinheit (20) ausgesendeten Ultraschallsignale von wenigstens einem Reflektor (30) zur Ultraschallwandlereinheit (20) zurück reflektiert werden und die Ultraschallsignale den Messpfad (24, 34, 64) von der Ultraschallwandlereinheit (20) zum Reflektor (30, 50) und zurück zur Ultraschallwandlereinheit (20) auf wenigstens drei unterschiedlichen Pfadabschnitten (24a, 24b, 24c, 34a, 34b, 34c, 64a, 64b, 64c) durchlaufen,

  **dadurch gekennzeichnet,**
  **dass** die Ultraschallwandlereinheit (20) so ausgerichtet ist, dass die Ultraschallsignale unter betragsmäßig gleichen Abstrahlwinkeln ($\gamma$) und Einfallswinkeln ($\phi$) in Bezug auf die Flächennormale (40) ausgesendet und nach Durchlaufen des Messpfades (24, 34) wieder empfangen werden.

12. Verfahren nach Anspruch 11, **gekennzeichnet durch** die weiteren Schritte:

  - Aussenden der Ultraschallsignale in einer ersten Messung derart, dass die Ultraschallsignale in einer ersten Laufzeitmessung den Messpfad (24, 34, 64) in einer ersten Richtung (24.1, 34.1, 64.1) und in einer zweiten Laufzeitmessung in einer der ersten Richtung entgegengesetzten zweiten Richtung (24.2, 34.2, 64.2) durchlaufen, und
  - Bestimmen einer mittleren Flussgeschwindigkeit (v) des Fluids (18) aus einer Differenz der ersten und der zweiten Laufzeitmessung.

**Claims**

1. A flow meter for measuring a flow of a fluid (18) having

- a measurement sensor (12) that has a conduit (14) for the fluid (18) having a pipe wall (16);
- at least one phased array ultrasound transducer unit (20) that has ultrasound transducers (22) arranged in a planar array having a surface normal (40) that can irradiate ultrasound signals at different irradiation angles ($\gamma$), and that can receive ultrasound signals from different reception angles ($\phi$);
- a control and evaluation unit (28) that is configured to control the ultrasound transducer unit (20) to transmit the ultrasound signals along a measurement path (24, 34, 64) and to evaluate the received ultrasound signals and to determine a flow using times of flight of the ultrasound signals, wherein the measurement sensor (12) has at least one reflector (30, 50) that is configured to reflect the ultrasound signals transmitted by the ultrasound transducer unit (20) back to the same ultrasound transducer unit (20), and the ultrasound signals pass through the measurement path (24, 34, 64) from the ultrasound transducer unit (20) to the reflector (30, 50) and back to the ultrasound transducer unit (20) on at least three different path sections (24a, 24b, 24c, 34a, 34b, 34c, 64a, 64b, 64c),

**characterized in that**

the ultrasound transducer unit (20) is oriented such that the ultrasound signals are transmitted and received back after passing through the measurement path (24, 34) at irradiation angles ($\gamma$) and angles of incidence ($\phi$) of the same amounts with respect to the surface normal (40).

2. A device in accordance with claim 1, **characterized in that** the control and evaluation unit (28) is configured to control the ultrasound transducer unit (20) such that the ultrasound signals pass through the measurement path (24,34, 64) in a first direction (24.1, 34.1, 65.1) in a first time of flight measurement and in a second direction (24.2, 34.2, 64.2) opposite the first direction in a second time of flight measurement and to determine an average flow rate (v) of the fluid (18) from a difference of the time of flight measurements.

3. A device in accordance with any one of the preceding claims, **characterized in that** the ultrasound transducer unit (20) is integrated in the pipe wall (16).

4. A device in accordance with any one of the preceding claims, **characterized in that** the reflector (30, 50) is arranged after the ultrasound transducer unit (20) in the direction of flow of the fluid (18).

5. A device in accordance with any one of the preceding claims, **characterized in that** the reflector (30) and/or the ultrasound transducer unit (20) is/are arranged in a depression (44) of the pipe wall (16).

6. A device in accordance with claim 5, **characterized in that** the depression (44) is at least partly covered.

7. A device in accordance with any one of the preceding claims, **characterized in that** the path section (24c, 34c) of the measurement path (24, 34) disposed between the reflector (30) and the ultrasound transducer unit (20) extends at a path angle ($\beta$) to the center axis (26) of the conduit (14) of less than 20 degrees, preferably less than 15 degrees.

8. A device in accordance with any one of the preceding claims, **characterized in that** the control and evaluation unit (28) is configured to control the ultrasound transducer unit to track the irradiation angle ($\gamma$) in dependence on the average flow rate (v) of the fluid (18).

9. A device in accordance with any one of the preceding claims, **characterized in that** the ultrasound transducer unit (20) is configured as a one-dimensional array comprising a row of at least two ultrasound transducers (22), with the rows being oriented in parallel with the measurement path (24).

10. A device in accordance with any one of the claims 1 to 8, **characterized in that** the ultrasound transducer unit (20) is configured as a two-dimensional array of ultrasound transducers (22).

11. A method of measuring a flow of a fluid (18) flowing in a conduit (14) comprising the steps:

- transmitting ultrasound signals along a measurement path (24, 34, 64) in the conduit by a phased array ultrasound transducer unit (20) controlled by a control and evaluation unit (28) and having ultrasound transducers (22) arranged in a planar array having a surface normal (40);
- receiving the transmitted ultrasound signals by the same ultrasound transducer unit (20) after passing through the measurement path (24, 34, 64);
- evaluating the received ultrasound signals and determining a flow of the fluid (18) using times of flight of the ultrasound signals by the control and evaluation unit (28),

wherein the ultrasound signals transmitted by the ultrasound transducer unit (20) are reflected back to the ultrasound transducer unit (20) by at least one reflector (30) and the ultrasound signals pass through the measurement path (34, 34, 64) from the ultrasound transducer unit (20) to the reflector (30, 50) and back to the ultrasound transducer unit (20) on at least three different path sections (24a, 24b, 24c, 34a, 34b, 34c, 64a, 64b, 64c),
**characterized in that**
the ultrasound transducer unit (20) is oriented such that the ultrasound signals are transmitted and received back after passing through the measurement path (24, 34) at irradiation angles ($\gamma$) and angles of incidence ($\phi$) of the same amounts with respect to the surface normal (40).

**12.** A method in accordance with claim 11, **characterized by** the further steps:

- transmitting the ultrasound signals in a first measurement such that the ultrasound signals pass through the measurement path (24, 34, 64) in a first direction (24.1, 34.1, 64.1) in a first time of flight measurement and in a second direction (24.2, 34.2, 64.2) opposite the first direction in a second time of flight measurement; and
- determining an average flow rate (v) of the fluid (18) from a difference of the first and second time of flight measurements.

**Revendications**

**1.** Débitmètre pour mesurer le débit d'un fluide (18), comportant

- un capteur de mesure (12) qui comprend une conduite tubulaire (14) destinée au fluide (18) et présentant une paroi tubulaire (16),
- au moins une unité de transducteurs ultrasonores à commande de phase (20) ayant des transducteurs ultrasonores (22) disposés en un réseau plan présentant une normale à la surface (40), qui peut émettre des signaux ultrasonores dans différents angles de rayonnement (y) et recevoir des signaux ultrasonores depuis différents angles de réception ($\phi$),
- une unité de commande et d'évaluation (28) qui est réalisée pour piloter l'unité de transducteurs ultrasonores (20), destinée à émettre les signaux ultrasonores le long d'un chemin de mesure (24, 34, 64), et pour évaluer les signaux ultrasonores reçus et déterminer un débit en utilisant les temps de parcours des signaux ultrasonores, dans lequel le capteur de mesure (12) comprend au moins un réflecteur (30, 50) qui est réalisé pour réfléchir les signaux ultrasonores, émis par l'unité de transducteurs ultrasonores (20), en retour vers la même unité de transducteurs ultrasonores (20), et les signaux ultrasonores parcourent le chemin de mesure (24, 34, 64) de l'unité de transducteurs ultrasonores (20) vers le réflecteur (30, 50) et en retour vers l'unité de transducteurs ultrasonores (20) sur au moins trois tronçons de chemin différents (24a, 24b, 24c, 34a, 34b, 34c, 64a, 64b, 64c), **caractérisé en ce que**

l'unité de transducteurs ultrasonores (20) est orientée de telle sorte que les signaux ultrasonores sont émis selon des angles de rayonnement (y) et des angles d'incidence ($\phi$) égaux en valeur absolue, par rapport à la normale à la surface (40), et sont reçus après avoir parcouru le chemin de mesure (24, 34).

**2.** Dispositif selon la revendication 1, **caractérisé en ce que** l'unité de commande et d'évaluation (28) est réalisée pour piloter l'unité de transducteurs ultrasonores (20) de telle sorte que les signaux ultrasonores parcourent le chemin de mesure (24, 34, 64) dans une première direction (24.1, 34.1, 64.1), lors d'une première mesure de temps de parcours, et dans une deuxième direction (24.2, 34.2, 64.2) opposée à la première direction, lors d'une deuxième mesure de temps de parcours, et pour déterminer une vitesse d'écoulement moyenne (v) du fluide (18) à partir d'une différence des mesures de temps de parcours.

**3.** Dispositif selon l'une des revendications précédentes, **caractérisé en ce que** l'unité de transducteurs ultrasonores (20) est intégrée dans la paroi tubulaire (16).

**4.** Dispositif selon l'une des revendications précédentes, **caractérisé en ce que** le réflecteur (30, 50) est disposé en aval de l'unité de transducteurs ultrasonores (20) dans le sens d'écoulement du fluide (18).

**5.** Dispositif selon l'une des revendications précédentes, **caractérisé en ce que** le réflecteur (30) et/ou l'unité de transducteurs ultrasonores (20) sont disposés dans un renfoncement (44) de la paroi tubulaire (16).

6. Dispositif selon la revendication 5, **caractérisé en ce que** le renfoncement (44) est au moins partiellement masqué.

7. Dispositif selon l'une des revendications précédentes, **caractérisé en ce que** le tronçon de chemin (24c, 34c) du chemin de mesure (24, 34) situé entre le réflecteur (30) et l'unité de transducteurs ultrasonores (20) s'étend selon un angle de chemin ($\beta$) inférieur à 20 degrés, de préférence inférieur à 15 degrés, par rapport à l'axe médian (26) de la conduite tubulaire (14).

8. Dispositif selon l'une des revendications précédentes, **caractérisé en ce que** l'unité de commande et d'évaluation (28) est réalisée pour piloter l'unité de transducteurs ultrasonores de manière à faire suivre l'angle de rayonnement (y) en fonction de la vitesse d'écoulement moyenne (v) du fluide (18).

9. Dispositif selon l'une des revendications précédentes, **caractérisé en ce que** l'unité de transducteurs ultrasonores (20) est réalisée sous la forme d'un réseau unidimensionnel constitué d'une ligne d'au moins deux transducteurs ultrasonores (22), la ligne étant orientée parallèlement au chemin de mesure (24).

10. Dispositif selon l'une des revendications 1 à 8, **caractérisé en ce que** l'unité de transducteurs ultrasonores (20) est réalisée sous la forme d'un réseau bidimensionnel de transducteurs ultrasonores (22).

11. Procédé de mesure du débit d'un fluide (18) s'écoulant dans une conduite tubulaire (14), comprenant les étapes consistant à :

    - émettre des signaux ultrasonores le long d'un chemin de mesure (24, 34, 64) dans la conduite tubulaire (14), avec une unité de transducteurs ultrasonores à commande de phase (20) qui est pilotée par une unité de commande et d'évaluation (28) et qui comprend des transducteurs ultrasonores (22) disposés en un réseau plan présentant une normale à la surface (40),
    - recevoir les signaux ultrasonores émis avec la même unité de transducteurs ultrasonores (20), après qu'ils ont parcouru le chemin de mesure (24, 34, 64),
    - évaluer les signaux ultrasonores reçus et déterminer un débit du fluide (18) en utilisant les temps de parcours des signaux ultrasonores, avec l'unité de commande et d'évaluation (28),
    - les signaux ultrasonores émis par l'unité de transducteurs ultrasonores (20) étant réfléchis par au moins un réflecteur (30) en retour vers l'unité de transducteurs ultrasonores (20), et les signaux ultrasonores parcourant le chemin de mesure (24, 34, 64) de l'unité de transducteurs ultrasonores (20) vers le réflecteur (30, 50) et en retour vers l'unité de transducteurs ultrasonores (20) sur au moins trois tronçons de chemin différents (24a, 24b, 24c, 34a, 34b, 34c, 64a, 64b, 64c),

**caractérisé en ce que** l'unité de transducteurs ultrasonores (20) est orientée de telle sorte que les signaux ultrasonores sont émis selon des angles de rayonnement (y) et des angles d'incidence ($\phi$) égaux en valeur absolue, par rapport à la normale à la surface (40), et sont reçus après avoir parcouru le chemin de mesure (24, 34).

12. Procédé selon la revendication 11, **caractérisé par** les autres étapes consistant à :

    - émettre les signaux ultrasonores lors d'une première mesure de telle sorte que les signaux ultrasonores parcourent le chemin de mesure (24, 34, 64) dans une première direction (24.1, 34.1, 64.1), lors d'une première mesure de temps de parcours, et dans une deuxième direction (24.2, 34.2, 64.2) opposée à la première direction, lors d'une deuxième mesure de temps de parcours, et
    - déterminer une vitesse d'écoulement moyenne (v) du fluide (18) à partir d'une différence entre la première et la deuxième mesure de temps de parcours.

Fig. 1

Fig. 2a

Fig. 2b

Fig. 3

Fig. 4

Fig. 5a

Fig. 5b

Fig. 5c

Fig. 6

Fig. 7

**IN DER BESCHREIBUNG AUFGEFÜHRTE DOKUMENTE**

**In der Beschreibung aufgeführte Patentdokumente**

- US 4467659 A
- DE 102013101950 A1
- EP 2103912 A1
- US 20150020608 A1

**In der Beschreibung aufgeführte Nicht-Patentliteratur**

- **KANG et al.** Two-dimensional flexural ultrasonic phased array for flow measurement. *2017 IEEE International Ultrasonics Symposium (IUS), Washington, DC, USA,* 06. September 2017, ISSN 1948-5727